# EUROPEAN PATENT SPECIFICATION

(11) **EP 2 869 535 B1**
(45) Date of publication and mention of the grant of the patent: **02.05.2018**
(21) Application number: 14188705.9
(22) Date of filing: 13.10.2014
(51) Int. Cl.: H04L 29/08, H04L 12/24, H04L 12/721

(54) **Carrying instructions in packets in a named data network**
Mitführen von Instruktionen in Packeten in einem Named Data Netzwerk
Transport d'instructions dans des paquets dans un réseau de données nommées

(30) Priority: 29.10.2013 US 201314066475
(43) Date of publication of application: 06.05.2015
(73) Proprietor: Cisco Technology, Inc., San Jose, CA 95134 (US)
(72) Inventor: Scott, Glenn C., Los Altos, CA 94024 (US); Mahadevan, Priya, Sunnyvale, CA 94089 (US); Mosko, Marc E., Santa Cruz, CA 95060 (US)
(74) Representative: Kazi, Ilya

(56) References cited:
- US-A1- 2012 314 580
- WETHERALL DAVID: "Active network vision and reality: lessons from a capsule-based system", PROCEEDINGS OF THE ACM SYMPOSIUM ON OPERATING SYSTEMS PRINCIPLES, XX, XX, vol. 34, no. 5, 1 December 1999 (1999-12-01), pages 64-79, XP002197921,
- KULKARNI A B ET AL: "Implementation of a prototype active network", OPEN ARCHITECTURES AND NETWORK PROGRAMMING, 1998 IEEE SAN FRANCISCO, CA, USA 3-4 APRIL 1998, NEW YORK, NY, USA,IEEE, US, 3 April 1998 (1998-04-03), pages 130-142, XP010272580, DOI: 10.1109/OPNARC.1998.662049 ISBN: 978-0-7803-4783-0
- "OpenFlow Switch Specification, Version 1.4.0", ONF TS-012, 14 October 2013 (2013-10-14), pages 1-206, XP055235997, Retrieved from the Internet: URL:https://www.opennetworking.org/images/ stories/downloads/sdn-resources/onf-specif ications/openflow/openflow-spec-v1.4.0.pdf [retrieved on 2015-12-14]
- Anonymous: "Computer program - Simple English Wikipedia, the free encyclopedia", , 21 March 2013 (2013-03-21), XP055242579, Retrieved from the Internet: URL:https://simple.wikipedia.org/w/index.p hp?title=Computer_program&oldid=4325489 [retrieved on 2016-01-19]
- Lan Wang ET AL: "OSPFN: An OSPF Based Routing Protocol for Named Data Networking", , 25 July 2012 (2012-07-25), XP055273414, Retrieved from the Internet: URL:http://new.named-data.net/wp-content/u ploads/TROSPFN.pdf [retrieved on 2016-07-05]

## Description

The invention is specified by the independent claims 1, 5, and 6. Further embodiments are specified in the dependent claims 2-4. One embodiment provides a packet-forwarding device that operates in an information-centric network (ICN), and facilitates executing instructions included in a packet to manipulate one or more local resources. Specifically, each packet includes a name. The packet's name can have a fixed length, or can have an arbitrary length. The packet's name can be hierarchical (e.g., includes an ordered sequence of name elements), or can be a flat name (e.g., a hash value). The packet can also carry instructions that can manipulate resources at network devices that receive, process, store, and/or forward the packet. This allows the control plane of a router architecture to be governed by the packet's name and instructions, and not by preprogrammed instructions at the various network nodes, as occurs in US 2012/314580 A1. In some embodiments, the packet can also carry a payload. Thus, for example, a router in a content centric network (CCN) does not need to process separate packet types for Interests and Content Objects. A packet's instructions can cause a packet-forwarding device to process the packet as an Interest, to process the packet as a Content Object, or to process the packet in a custom way.

"Active network vision and reality: lessons from a capsule-based system", Proceedings of the ACM Symposium on Operating Systems Principles vol. 34 no. 5 (1999-12-01), pages 64-79 suggests that code can be carried or carried by reference by capsules in an active network. "OSPFN: An OSPF Based Routing Protocol for Named Data Networking" by Lan Wang, et al., July 25, 2012, suggests a protocol for distributing name prefixes, calculating routes to name prefixes, and updating Forwarding Information Bases, FIBs, on routers accordingly.

The packet-forwarding device can include, for example, a router, a wireless access point, a cache server, a computer cluster, a peer network device, or any other device coupled to a named-data network or an information-centric network. The device's resources can include a forwarding information base (FIB), a pending interest table (PIT), a content store (CS), a repository, and/or any other resources now known or later developed. The device's resource can also include any other resource accessible to a computing device, such as a processing unit, a memory, a non-volatile storage device, a network interface, etc.

During operation, the packet-forwarding device can receive a packet that may include a header comprising one or more resource fields that each includes instructions to execute against a corresponding resource. The device can select a resource field from the packet, analyzes the resource field to determine the instructions that are to be processed, and executes the instructions to manipulate the corresponding resource.

In some embodiments, the instructions can include a create instruction, a read instruction, an update instruction, and/or a delete instruction. The create instruction can configure the device to create a new entry in the resource, and the read instruction can configure the device to read an entry of the resource. The update instruction can configure the device to update an existing entry of the resource, and the delete instruction can configure the device to delete an existing entry of the resource.

In some embodiments, the instructions can include a program that is to be executed by the packet-forwarding device.

In some embodiments, the instructions can configure routing information at the packet-forwarding device.

In some embodiments, the instructions can configure a maximum bandwidth for an interface of the packet-forwarding device or for a face of the end-device.

In some embodiments, the instructions indicate utilization statistics that are to be compiled from the resource. While executing the instructions, the device can read one or more entries of the resource, and compiles utilization statistics based on the information read from the resource. The device can then generate a second packet that includes the compiled utilization statistics in the packet's payload, and returns the second packet through an interface from which the initial packet was received.

In some embodiments, the packet's header can include access control information. The packet-forwarding device can determine whether the access control information grants the packet permission to access the resource, and if so, executes the instructions to manipulate the resource.

Embodiments of the present invention provide a packet-forwarding system that solves the problem of determining how to process a packet in an information-centric network (ICN), a content-centric network (CCN), or a named-data network (NDN) by obtaining instructions from the packet itself. CCN or NDN is an example of an Information-centric networking architecture. The packet contains a name (typically location-independent) that can be used to route the packet. The packet can also carry instructions that can be executed to manipulate a network's resources. For example, network nodes may process a packet as a data-requesting packet (e.g., an Interest packet), or as a data-carrying packet (e.g., a Content Object), depending on instructions included in the packet. The packet may include a header that includes the instructions that govern how the packet is to be processed. The packet may also include a payload, which can carry data (similar to a Content Object), and/or can carry instructions or programs that can be processed by a network device. The instructions from the packet's header or payload can cause the network device to create, read, update, or delete (CRUD) data at a resource accessible by the network device.

In some embodiments, the system can execute instructions included in the packet to perform fundamental CCN operations. In CCN, all content is named, and each piece of data is bound to a unique name that distinguishes the data from any other piece of data, such as other versions of the same data or data from other sources. This unique name allows a network device to request the data by disseminating an Interest that includes the name (or a name prefix), and can obtain the data independent from the data's storage location, network location, application, and means of transportation. A description of a CCN architecture is described in U.S. Patent Application No. 12/338,175 (entitled "CONTROLLING THE SPREAD OF INTERESTS AND CONTENT IN A CONTENT CENTRIC NETWORK," by inventors Van L. Jacobson and Diana K. Smetters, filed 18 December 2008).

The following terms describe elements of a CCN architecture:
Content Object: A single piece of data, which is bound to a unique name. Content Objects are "persistent," which means that a Content Object can move around within a computing device, or across different computing devices, but does not change. If any component of the Content Object changes, the entity that made the change creates a new Content Object that includes the updated content, binds the new Content Object to a new unique location-independent name.
Unique Names: A name in a CCN (or named-data network) is typically location independent and uniquely identifies a Content Object. A data-forwarding device can use the name or name prefix to forward a packet toward a network node that generates or stores the Content Object, regardless of a network address or physical location for the Content Object. In some embodiments, the name may be a hierarchically structured variable-length identifier (HSVLI). The HSVLI can be divided into several hierarchical components, which can be structured in various ways. For example, the individual name components parc, home, ccn, and test.txt can be structured in a left-oriented prefix-major fashion to form the name "/parc/home/ccn/test.txt." Thus, the name "/parc/home/ccn" can be a "parent" or "prefix" of "/parc/home/ccn/test.txt." Additional components can be used to distinguish between different versions of the content item, such as a collaborative document.

In some embodiments, the name can include a non-hierarchical identifier, such as a hash value that is derived from the Content Object's data (e.g., a
checksum value) and/or from elements of the Content Object's name. A description of a hash-based name is described in U.S. Patent Application No. 13/847,814 (entitled "ORDERED-ELEMENT NAMING FOR NAME-BASED PACKET FORWARDING," by inventor Ignacio Solis, filed 20 March 2013). A name can also be a flat label. Hereinafter, "name" is used to refer to any name for a piece of data in a name-data network, such as a hierarchical name or name prefix, a flat name, a fixed-length name, an arbitrary-length name, or a label (e.g., a Multiprotocol Label Switching (MPLS) label).

Interest: A packet that indicates a request for a piece of data, and includes the name (or name prefix) for the data. A data consumer can disseminate an Interest across a named-data network, which CCN routers can propagate toward a storage device (e.g., a cache server) or a data producer that can provide the a matching Content Object to satisfy the Interest.

In some embodiments, the system can receive a packet that indicates whether the packet is to be processed similar to an Interest or a Content Object, or needs to be processed in a custom way. For example, the packet can include instructions that read a router's forwarding information base (FIB) and/or create an entry into a pending interest table (PIT), to forward the packet in a way similar to an Interest. As another example, the packet can include instructions that read a router's PIT to return the packet in a way similar to a Content Object that satisfies the Interest.

The packet can also be used to perform advanced operations on any ICN or NDN architecture that is now known or later developed. For example, the packet can include a payload, and can include instructions that access a router's FIB to push the packet's payload toward one or more network devices that are associated with a given namespace.

In some embodiments, a system administrator can configure or reconfigure one or more routers across a network by disseminating a packet that includes instructions for deploying the desired changes to the network. The packet can include instructions that configure a router to create, update, or delete one or more entries in a FIB, for example, to establish new route paths and/or to tear down other route paths. The packet can also include instructions that establish Quality of Service (QoS) requirements at a router, such as to perform traffic shaping on an interface of the router.

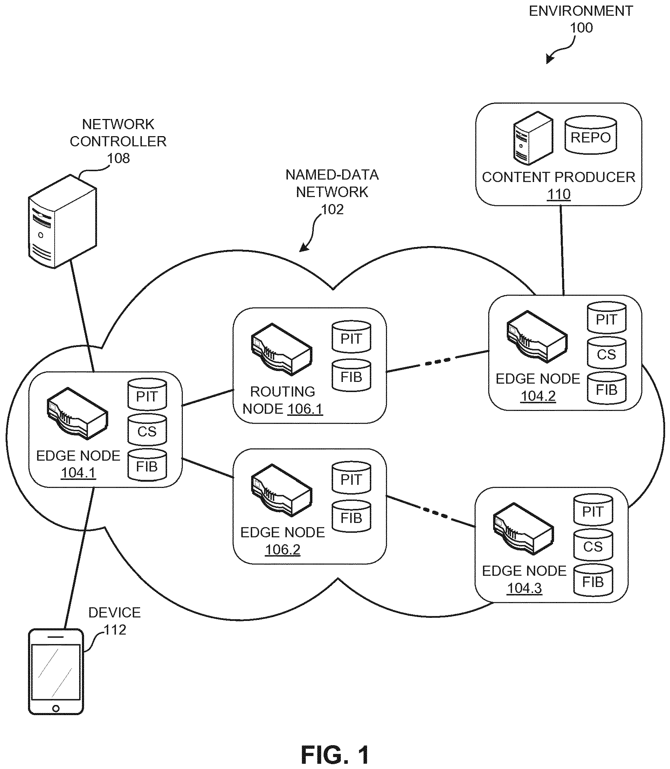

FIG. 1 illustrates an exemplary computing environment 100 that facilitates forwarding a packet based on instructions included in the packet in accordance with an embodiment. Computing environment 100 can include a named-data network 102 (or an information-centric network), which includes a plurality of edge nodes 104 and routing nodes 106. Both edge nodes 104 and routing nodes 106 can process packets by executing instructions included in these packets. For example, network 102 can be managed by an Internet service provider (ISP), and can include an edge node 104.1 that provides network access to a plurality of client devices. Network 102 can also include an edge node 104.2 that provides network access to a plurality of online services, and/or that interfaces with a back-haul network accessible by a plurality of online services.

Computing environment 100 can also include other network devices that can disseminate packets across network 102. For example, an online-service provider can deploy an online service at a content producer 110 that is accessible via network 102. Content producer 110 can include a server computer or a computer cluster that interfaces with edge node 104.2 of network 102, and can include a repository that stores data for one or more users. However, routing nodes 106 are best able to route a packet to content producer 110 when routing nodes 106 include a FIB entry that maps the packet's name or name prefix to an optimal local interface that can best reach content producer 110.

In some embodiments, the online-service provider can use a network controller 108 to configure an optimal route path to content producer 110 for a given namespace, or for various names or name prefixes. This optimal path can start from an ingress edge node that provides network access to a plurality of client devices, and reaches an egress edge node 104.2 along a path to content producer 110.

Network controller 108 can generate a packet that indicates one or more FIB entries for each edge node 104 and each routing node 106 along the path, and that include instructions for inserting these FIB entries into the corresponding network nodes of network 102. This packet can also include instructions for accessing the new FIB entries to forward the packet to another network node along the path toward content producer 110. Hence, network controller 108 can send this packet to edge node 104.1 to establish the optimized path toward content producer 110 by creating the necessary FIB entries along the path.

In some embodiments, a network device can generate packets that include the instructions necessary to send or obtain a certain piece of data over a named-data network or an information-centric network. For example, client device 102 can generate a packet that contains a name or name prefix for the piece of data, and also includes instructions for reading a FIB entry. Client device 102 can then disseminate this packet across network 102 to obtain the data from any device of network 102 that can satisfy the request based on the packet's name or name prefix. Routers that receive this packet execute the instructions that read the FIB to obtain a FIB entry associated with the name or name prefix, and forward the packet via an interface indicated by the FIB entry.

Also, in some embodiments, client device 112 can push data toward content producer 110 by also attaching the data as a payload in the packet. The packet can also include instructions indicating whether the payload is to be cached by a routing node. For example, a routing node (e.g., edge nodes 104.1 and 104.2) can include a content store (CS) to cache payload data from network packets that pass through network 102 (e.g., to cache Content Objects). If the routing node detects that a packet includes instructions that perform a write or update operation on a CS resource, the routing node can store the packet's payload in the CS, by associating the payload data to the packet's name or name prefix.

On the other hand, if the routing node detects that the packet includes instructions that read the CS resource, the routing node can search the CS for data associated with the packet's name or name prefix. If this data exists in the CS, the routing node can insert this data into the packet's payload. Also, if the packet includes instructions that read the PIT resource, the routing node can read the PIT resource to determine an interface to use to return the new packet that includes the data, and returns the packet using this interface. This interface can be the same interface from which the routing node received the packet, or can include any other interface that has been entered into the PIT in association with the packet's name or name prefix.

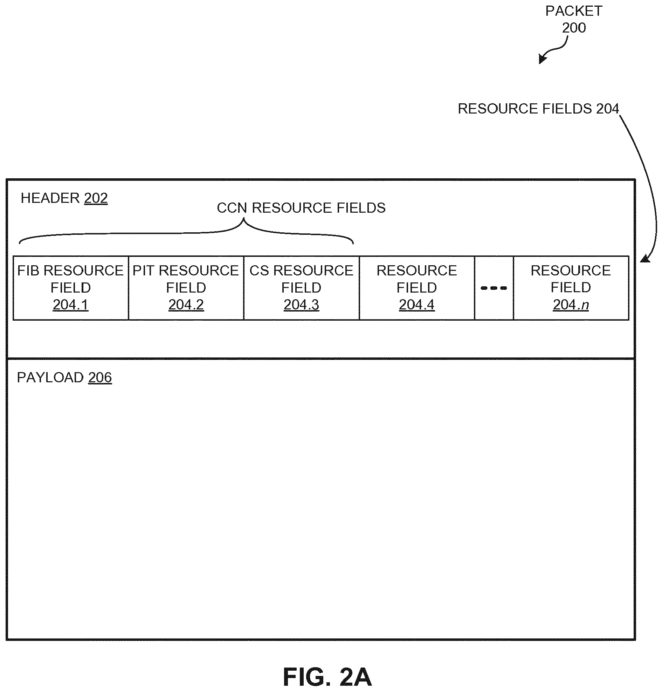

FIG. 2A illustrates an exemplary network packet 200 in accordance with an embodiment. Specifically, packet 200 can include a name (or name prefix), and a header 202 that includes instructions that are to be executed against on one or more resources of a forwarding node. Header 202 can include a plurality of resource fields 204, such that each resource field is associated with a resource of the forwarding node, and includes instructions for the corresponding resource. Packet 200 can also include a payload 206 that can
hold data for a target device, or can hold data to be used by a router while executing instructions from one or more of the resource fields.

Resource fields 204 can include a set of fields for resources of a CCN, NDN, or ICN architecture, such as a FIB resource field 204.1 for a Forwarding Information Base, a PIT resource field 204.2 for a Pending Interest Table, and a CS resource field 204.3 for a Content Store. For example, resource fields 204.1 and 204.2 may include a "write" instruction for a PIT and a "read" instruction for a FIB, which causes a forwarding node to process the packet like an Interest. Also, if a network node can satisfy the Interest by generating the requested data, the network node can generate another packet that includes the same name for the data, but that also includes a set of programmed header fields that send the packet back to the initial packet's source. This new packet can include a resource field 204.2 which includes a "read" instruction for the PIT, which causes the forwarding nodes to process the packet like a Content Object by forwarding the packet via an interface from which the corresponding request or Interest was received. Further, the packet's data (payload) can also be cached in the CS.

Resource fields 204 can also include one or more fields for any other network-device resources now known or later developed. These additional resources can support additional features that are deployed at a network node, or can support additional features of a higher-level named-data networking architecture or information-centric networking architecture. For example, network nodes can also include a "metrics" resource that records various metrics for the network node. A "read" instruction in a metrics resource field can cause the network node to compile a report of various performance metrics, to generate a packet that includes the metrics report, and to return the packet.

As another example, a "QoS" resource can reconfigure routing behavior at a network node based on a packet that includes instructions to execute against the QoS resource. A QoS resource field can include a "create" or "update" instruction that enters a traffic-shaping configuration into the QoS resource. This traffic-shaping configuration can indicate, for example, a maximum bandwidth for a given interface. Also, a QoS resource field can include a "read" or "delete" instruction that reads or removes a traffic-shaping configuration for a given interface.

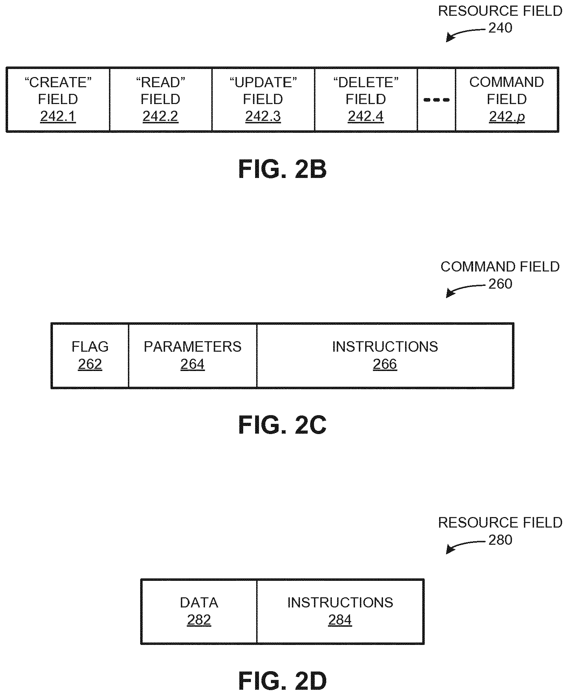

FIG. 2B illustrates an exemplary resource field 240 that includes a set of instruction fields 242 in accordance with an embodiment. Each instruction field can correspond to a predetermined operation that can be performed on a corresponding resource. For example, a FIB, a PIT, and a CS can each store data that can be used to forward a data-requesting packet (e.g., an Interest), or for caching or returning data (e.g., a Content Object). Hence, resource field 240 can include a field for each of various basic functions that can be performed on persistence storage, such as "create," "read," "update," and "delete" (CRUD). The network node can perform these functions on a local resource based on a packet's name or name prefix. A "create" field 242.1 indicates whether a network node is to create an entry in a resource, and a "read" field 242.2 indicates whether the network node is to read an entry from the resource. An "update" field 242.3 indicates whether the network node is to update an existing resource entry, and a "delete field 242.4 indicates whether the network node is to delete an existing entry of the resource.

In some embodiments, each instruction field may include a flag, such as a single bit or a group of bits (e.g., a byte or a word) that indicate whether the corresponding instruction or operation is to be performed. For example, an instruction field that includes a binary '1' value is interpreted as "indicating" or "including" an instruction associated with the instruction field that the network node is to execute against the corresponding resource. An instruction field that includes a binary '0' value is interpreted as not including the instruction associated with the instruction field, or can be interpreted as indicating that the operation associated with the instruction field is not to be performed on the corresponding resource. If the forwarding node determines that an instruction field is set in the packet, the forwarding node can determine one or more instructions that correspond to the instruction field (e.g., binary instructions), and executes these instructions on the resource to process the packet.

Table 1 presents an exemplary set of operations performed by a forwarding node in response to detecting a set flag in an instruction field of a resource field. When the forwarding node detects that an instruction field's flag is set for a given resource, the system can perform a set of instructions or operations that correspond to the instruction field (listed in the first column of TABLE 1) and to the resource (listed in the top row of TABLE 1).

In some embodiments, the instruction field can also include an explicit set of instructions that when executed by the forwarding node, cause the forwarding node to manipulate or otherwise perform operations on the resource to process the packet. These instructions can include a script (e.g., instruction written in an interpreted language), or can include a standalone program (e.g., binary instructions executed by a processor or a virtual machine). A forwarding node can execute these instructions to perform a CRUD operation in a custom way, such as to selectively create, update, or delete FIB entries to configure how the forwarding node forwards packets.

In some embodiments, a packet can also perform a custom "create" or "update" operation on a FIB entry to dynamically change routes on-the-fly as the packet traverses the network toward a target network node associated with the packet's name or name prefix. For example, the FIB resource field can include a "delete" instruction that removes FIB entries for failed links, and can include a "create" or "update" instruction to update the FIB in a way that diverts network traffic away from over-utilized interfaces and toward less-utilized interfaces.

**TABLE 1: Exemplary Resource Operations for each CRUD Instruction**

| | FIB | PIT | cs |
|---|---|---|---|
| Create | Add an entry in the FIB, indexed by the packet's name or by a name prefix derived from the packet's name. The new FIB entry stores a network interface specified in the packet (to configure a predetermined route), or stores a network interface from which the packet was received (e.g., to establish a route to a content producer). | Add an entry in the PIT, indexed by the packet's name or by a name prefix derived from the packet's name, storing a network interface from which the packet was received. This causes the packet to be processed like a CCN Interest. | Add an entry in the CS, indexed by the packet's name or a name prefix derived from the packet's name, storing the packet's payload. This causes the packet to be processed like a CCN Content Object at a Content Store. |
| Read | Read an entry in the FIB indexed by the packet's name or by a name prefix derived from the packet's name, to obtain a network interface to use to forward the packet. This causes the packet to be processed like a CCN Interest. | Read an entry in the PIT indexed by the packet's name or by a name prefix derived from the packet's name, to obtain a network interface to use to forward the packet. This causes the packet to be processed like a CCN Content Object. | If a packet includes a "read" instruction for the CS, then read an entry in the CS indexed by the packet's name or by a name prefix derived from the packet's name, and return a cached data object via an interface from which the packet was received. This causes the packet to be processed like a CCN Interest at a Content Store. |
| | | | If a packet does not include a "read" instruction for the CS but includes a read instruction for the FIB, the packet is to be forwarded without searching for a cached copy in the CS. |
| Update | Update a FIB entry indexed by the packet's name, or by a name prefix derived from the packet's name. | Update a PIT entry indexed by the packet's name, or by a name prefix derived from the packet's name. | Replace data (e.g., a Content Object) cached in the CS under the packet's name, or under a name prefix derived from the packet's name, with the packet's payload. |
| Delete | Delete a FIB entry indexed by the packet's name, or by a name prefix derived from the packet's name. | Delete a PIT entry indexed by the packet's name, or by a name prefix derived from the packet's name. | Delete data (e.g., a Content Object) cached in the CS under the packet's name, or under a name prefix derived from the packet's name. |

FIG. 2C illustrates an exemplary instruction field 260 that includes an explicit set of instructions in accordance with an embodiment. Specifically, instruction field 260 can include a flag 262, a set of parameters 264, and a set of instructions 266. Flag 262 can include a single bit, or a group of bits that indicate whether the corresponding operation is to be performed.

Parameters 264 can include any additional data necessary for performing the "create," "read," "update," or "delete" instruction or operation. For example, a "read" instruction field for the FIB resource can include parameters 264 that indicate a number of hops to use when forwarding a packet. As another example, a "create" or "update" instruction field for a FIB resource or a PIT resource can include parameters 264 that include the data that is to be inserted into an entry of the resource. This can allow a network controller to configure routes across a named-data network or information-centric network by disseminating packets whose instructions create the necessary entries into FIB and PIT resources across the network.

Instructions 266 can include instructions that are to be executed by the network node to perform the operation on the resource. This can allow a network node to perform pre-processing tasks before accessing the resource, or to perform post-processing tasks after accessing the resource.

In some embodiments, a content producer can prepopulate content at various cache servers by disseminating a packet that includes a "write" instruction for the CS resource, and that includes a payload with the data to store at the cache servers. The content server can disseminate this packet to "push" this content to a remote consumer associated with the packet's name or name prefix (e.g., a remote cache server), and deposits this data at various CS resources along the path to the remote consumer. Hence, the content producer can prepopulate various caches with data, without requiring an Interest or a data-requesting packet to first reach the content producer, and without requiring the content producer to respond to a request for the data from a client device.

In some embodiments, a resource field may not need to include separate instruction fields for each type of CRUD function that can be performed on a resource. The resource field can include a set of instructions that form a program which operates on one or more resources to achieve a custom task.

FIG. 2D illustrates an exemplary resource field 280 that includes program instructions that are to be executed by a network node in accordance with an embodiment. Resource field 280 can include a set of instructions 284 that are to be executed by a network node to process a packet, and can include data 282 that can be used by instructions 284.

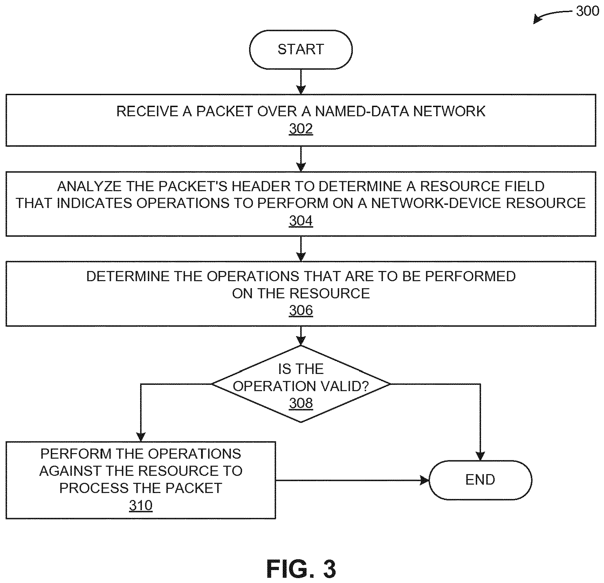

FIG. 3 presents a flow chart illustrating a method 300 for processing a packet at a network node in accordance with an embodiment. During operation, the system can receive a packet over a named-data network or an information-centric network (operation 302). The system analyzes the packet's header to determine one or more resource fields that each corresponds to a resource of the local network node (operation 304).

Recall that each resource field can include instructions to perform on a corresponding resource of the network device. The system can analyze each resource field to determine the instructions to execute to manipulate the corresponding resource (operation 306). The system also determines whether the instructions are valid (operation 308). For example, the system can determine whether the resource exists and is accessible by the local device, and can determine whether the instructions can be executed against the resource. Also, the system can determine whether the packet has valid access control information that grants the packet permission to execute the instructions against the resource. If the instructions are valid, the system processes the packet by executing the instructions against their corresponding resources (operation 310).

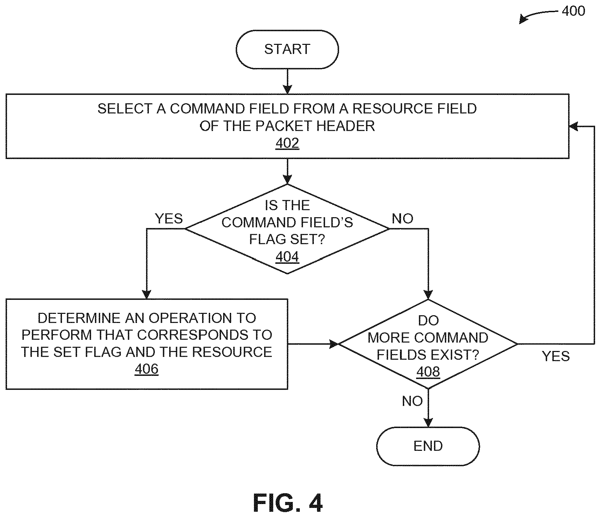

FIG. 4 presents a flow chart illustrating a method 400 for determining instructions to execute against a network-device resource based on instruction fields for a resource in accordance with an embodiment. During operation, the system analyzes a packet header's resource field, and selects an instruction field to process (operation 402). Recall that each instruction field may correspond to a predetermined operation that can be performed on a resource, such as a "create," "read," "update," or "delete" operation. The instruction field can include a flag, which indicates whether the corresponding operation is to be performed on the resource. Hence, the system analyzes the flag's value to determine whether the instruction field's flag is set (operation 404).

If the instruction field's flag is set, the system determines one or more instructions that correspond to the instruction field and to the resource (operation 406). Otherwise, the system continues to determine whether more instruction fields exist in the resource field (operation 408). If more instruction fields exist, the system can return to operation 402 to select another instruction field.

In some embodiments, not all packets are allowed to perform certain operations on a resource of a network node, such as a network node's FIB, PIT, or CS. For example, a system administrator can be allowed to configure a network by disseminating packets that configure routing information into FIB entries across various packet-forwarding nodes. On the other hand, a typical client device should not be allowed to build or tear down network paths that the client device does not control. Hence, the system should only execute an instruction against a local resource to process a packet if the packet has the appropriate privileges.

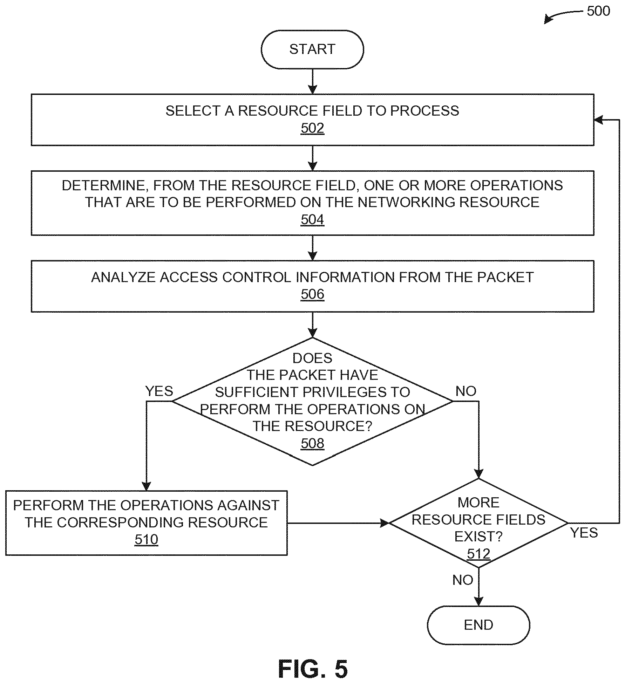

FIG. 5 presents a flow chart illustrating a method 500 for enforcing a security policy when determining which operations to perform on a network node's resources in accordance with an embodiment. During operation, the system selects a resource field to process (operation 502), and determines one or more instructions to execute against the corresponding resource (operation 504).

The system also analyzes access control information from the packet (operation 506), and determines whether the packet has sufficient privileges to execute the instructions against the resource (operation 508). If so, the system proceeds to execute the instructions against the corresponding resource (operation 510). Otherwise, the system proceeds to determine whether there are more resource fields to process (operation 512). If the header has more resource fields, the system returns to operation 502 to select another resource field to process.

In some embodiments, a packet's FIB resource field can include instructions that deposit FIB entries into various network nodes along a path toward a content producer associated with the packet's name or name prefix. These network nodes can belong to a named-data network, or to any information-centric network now known or later developed. For example, a content producer can use multiple servers to host content that is to be made available to a plurality of consumers. When the content producer uploads new content to any of these servers, the content producer can disseminate a packet that configures the network nodes to create or update a FIB entry for the packet's name or name prefix. At each network node, the FIB entry indicates a local interface that the network node is to use to forward data-requesting packets (e.g., Interest packets) that match the packet's name (or name prefix) toward any of the content producer's servers.

Recall that a packet's FIB resource field can include a "read" instruction that configures a network node to forward the packet toward a target network node based on a matching FIB entry. If a matching FIB entry does not exist, the local network node performs a default action, such as to forward the packet to a default interface associated with a root namespace (e.g., the namespace "/"). In some embodiments, a packet's FIB resource field can include instructions that are to be used as default operations that the forwarding node executes when a matching FIB entry does not exist.

Alternatively, the packet's FIB resource field can indicate a default outbound interface of the network node that leads to a default server that knows how to reach the target network node, or can indicate an alternative name or name prefix associated with the default server. The content producer can tunnel a path to the default server in a way that creates or writes FIB entries along this path. This way, when a packet associated with the content producer reaches the default server, the default server can forward the packet along an established path to the content producer.

In a CCN architecture, a network node reads a PIT entry to forward an Interest through an interface that has been mapped to that Interest's name. In some embodiments of the present invention, a packet can include instructions that update a PIT entry to redirect a path for a given namespace. For example, when a network node goes offline or an ISP takes the node offline, the ISP can generate a packet that includes instructions to redirect the network path away from the offline node. The packet's name or name prefix can be associated with a network node at which the network path is to be redirected, which allows the named-data network or information-centric network to forward the packet to this network node. Also, the packet's PIT resource field can include instructions to update PIT entries that formed a network path through the offline node so that the updated PIT entries form a path through an alternative network node.

Also, in a CCN architecture, PIT entries are typically removed after they are used to forward a packet through one or more interfaces that received an Interest for the packet. In some embodiments of the present invention, a content producer can ensure that a tunnel is maintained between the content producer and one or more client devices. For example, the content producer can receive an Interest for content from a client device, and generates a packet to satisfy the Interest. If the content producer needs to send additional packets to the same client device, such as in a data stream or a media stream, the content producer can generate the packet so that the PIT resource field does not include a "delete" instruction for the corresponding PIT entry. This configures the network routers to use the corresponding PIT entry to return the Content Object to the client device, without tearing down the tunnel to the client device by removing the PIT entry. Hence, the content producer can continue to stream packets to the client device, without requiring the client device to submit a request or an Interest for each individual packet in the data stream.

In a typical CCN architecture, when a content producer receives an Interest, the content producer can return a Content Object that satisfies the Interest, and forwarding nodes throughout the network can cache the Content Object in a Content Store (CS). This allows the forwarding nodes to satisfy other Interests for the same Content Object, without having to forward the Interest to the content producer. However, a content producer may not always want the Content Objects to be cached, such as for short-lived data (e.g., a stock quote) or for user-specific data (e.g., private account information).

In some embodiments, a content producer can utilize packet headers to perform cache management across various forwarding nodes that have been configured to cache content for the content producer. This allows the content producer to specify which packets are to have their payload cached, and to specify which cached data need to be updated (replaced) or deleted. For example, an online streaming service, such as Netflix Inc., may lease storage space across various edge nodes of an Internet service provider's network to store popular media streams. This allows the content producer to control which media streams are to be cached at any given point in time. A particular video may be popular for two weeks after it is made available via the service, but the demand for this video may diminish thereafter. In some instances, the ISP's cache servers may continue to store the video until other popular data needs to occupy the storage space, which can cause the ISP's cache servers to store the video even after its popularity has dwindled. Once the content producer determines that interest in the video has decayed below a given threshold, the content producer can disseminate a packet that proactively purges this video from the ISP's cache servers to reduce the storage fees it pays to the ISP.

Also, the content producer can send data to a client device without caching this data at the ISP's cache servers, for example, by generating the packet to include a CS resource field that does not have a flag set in the "create" or "update" instruction field. This can ensure that sensitive data, unpopular data, or time-specific data does not occupy valuable space at a content store.

In some embodiments, a content producer can purge cached data from various network nodes by disseminating a packet that includes instructions that are to be used by these network nodes to delete any entries that match the packet's name or name prefix. For example, an online service can allow forwarding nodes to cache the user's information while the online service has an active session with the user. The online service may assign to each piece of data a namespace associated with the user or the user's session, which allows the forwarding nodes to use this common namespace to cache data that has been sent to the user's device. Once the user's session has timed out or has been terminated by the user, the online service can disseminate a packet whose CS resource field includes instructions that delete any entries that match the namespace. Alternatively, the user's client device can disseminate a packet that is to traverse a path to the content producer (e.g., by including a FIB resource field that includes a read instruction), and that includes instructions to delete any corresponding Content Objects from the content store.

As a further example, the online service may periodically push data to various client devices through a persistent tunnel, and various forwarding nodes can cache the data to satisfy new requests for the data (e.g., to satisfy an Interest). If the data becomes obsolete, the online service can disseminate a packet with a namespace that matches the cached data, and that includes a CS resource field with instructions that deletes any cached data with a name prefix that matches this namespace. The online service can also replace the obsolete data in the CS by creating a packet that includes the new data in its payload, and includes instructions to update any CS entries with a matching name or name prefix. For example, an online brokerage company can periodically push new stock quotes to its users by generating a packet for each updated stock quote, such that this packet indicates that a forwarding node is to update (replace) an older version of the stock quote with the updated stock quote in the packet's payload.

In some embodiments, a system administrator can generate and disseminate a network packet that allows the administrator to gather utilization statistics from various forwarding nodes and cache servers. The system administrator can obtain utilization statistics from a particular resource by generating a packet that includes a "read" instruction field within a corresponding resource field of the packet's header, and includes a description of what data is being read as a parameter of the "read" instruction field.

For example, the system administrator can obtain utilization statistics at a particular router interface by generating a packet that includes a "read" instruction in a FIB resource field. The packet can be directed to the router's interface, for example, by including a name or name prefix associated with the router, and by including the router's interface as a parameter to the "read" instruction field. The packet's parameters can also indicate which types of utilization statistics are to be gathered. These utilization statistics can include a network bandwidth being utilized by a given interface, a number of packets that have been received and/or transmitted over a given time interval by a given interface, a utilization for a particular link, a bandwidth utilization for a given link, etc.

As another example, the system administrator can obtain utilization statistics from a given content store by generating a packet that includes a name that's mapped to the content store, and that includes a CS resource field with a "read" instruction field. The instruction field can also include parameters that indicate the utilization statistics that are to be gathered, such as a number of packets or a size of the data stored for a given namespace.

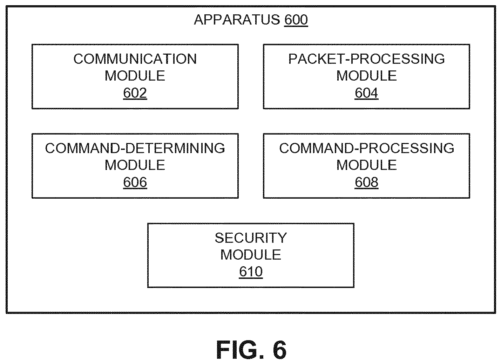

FIG. 6 illustrates an exemplary apparatus 600 that facilitates forwarding a packet based on instructions included in the packet in accordance with an embodiment. Apparatus 600 can comprise a plurality of modules which may communicate with one another via a wired or wireless communication channel. Apparatus 600 may be realized using one or more integrated circuits, and may include fewer or more modules than those shown in FIG. 6. Further, apparatus 600 may be integrated in a computer system, or realized as a separate device which is capable of communicating with other computer systems and/or devices. Specifically, apparatus 600 can comprise a communication module 602, a packet-processing module 604, an instruction-determining module 606, an instruction-processing-module 608, and a security module 610.

In some embodiments, communication module 602 can receive a packet that includes a header comprising one or more resource fields that each includes instructions to execute against a corresponding resource. Packet-processing module 604 can select, from the packet, a resource field that includes instructions to execute against a corresponding resource.

Instruction-determining module 606 can analyze the resource field to determine the one or more instructions that are to be executed, and instruction-processing module 608 can execute the instructions to manipulate the resource. Security module 610 can determine whether the access control information grants the packet permission to access the resource, and if so, can configure the instruction-processing module to execute the instructions.

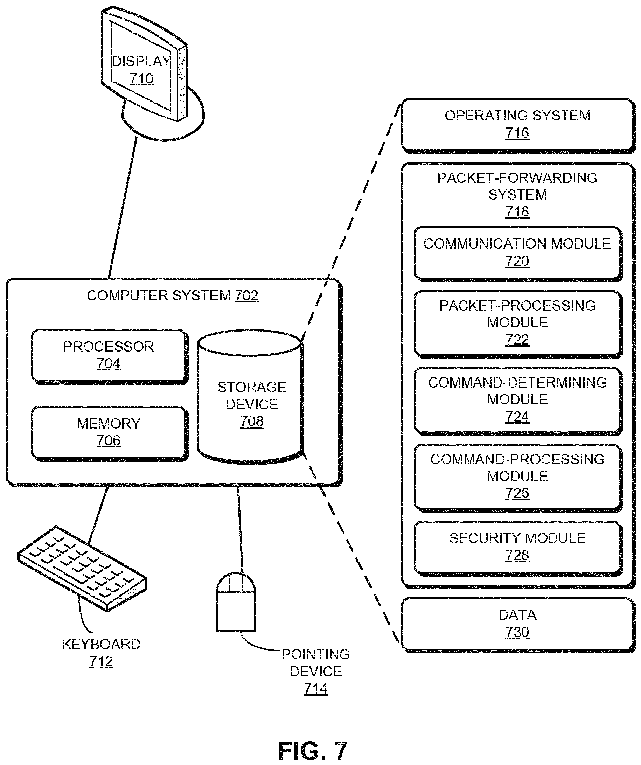

FIG. 7 illustrates an exemplary computer system 702 that facilitates forwarding a packet based on instructions included in the packet in accordance with an embodiment. Computer system 702 includes a processor 704, a memory 706, and a storage device 708. Memory 706 can include a volatile memory (e.g., RAM) that serves as a managed memory, and can be used to store one or more memory pools. Furthermore, computer system 702 can be coupled to a display device 710, a keyboard 712, and a pointing device 714. Storage device 708 can store operating system 716, packet-forwarding system 718, and data 730.

Packet-forwarding system 718 can include instructions, which when executed by computer system 702, can cause computer system 702 to perform methods and/or processes described in this disclosure. Specifically, packet-forwarding system 718 may include instructions for receiving a packet that includes a header comprising one or more resource fields that each includes instructions to execute against a corresponding resource (communication module 720). Further, packet-forwarding system 718 can include instructions for selecting, from the packet, a resource field that includes one or more instructions to execute against a corresponding resource (packet-processing module 722).

Packet-forwarding system 718 can also include instructions for analyzing the resource field to determine the one or more instructions that are to be executed (instruction-determining module 724), and can include instructions for executing the instructions on the resource (instruction-processing module 726). Packet-forwarding system 718 can also include instructions for determining whether the access control information grants the packet permission to access the resource, and for configuring the instruction-processing module to execute the commands if the access control information does grant permission to access the resource (security module 728).

Data 730 can include any data that is required as input or that is generated as output by the methods and/or processes described in this disclosure. Specifically, data 730 can store at least a FIB, a PIT, a CS, and information necessary for performing operations on the FIB, the PIT, and/or the CS.

## Claims

1. A computer-implemented method for processing a packet in a named-data network (102), comprising:
receiving (302) a packet (200) by a packet forwarding device (106.1),
wherein the packet includes a location-independent name or name prefix for routing the packet, and includes a header (202) comprising one or more resource fields (204), and wherein each resource field includes one or more instructions to perform on a corresponding resource of the packet forwarding device;
analyzing (304) each resource field to determine the one or more instructions to manipulate the corresponding resource; and
executing (310) the one or more instructions on the corresponding resource;
wherein the one of the resources is a forwarding information base, FIB, and wherein one of the instructions is performed on FIB entries to dynamically change routes on-the-fly as the packet traverses the network toward a target network node associated with the packet's name or name prefix;
and forwarding the packet.

2. The method of claim 1, wherein another one of the resources is a Quality of Service, QoS, resource, and wherein another one of the determined instructions is performed to configure a maximum bandwidth for an interface of the packet-forwarding device (106.1).

3. The method of claim 1, wherein another one of the resources is a Quality of Service, QoS, resource, and wherein another one of the determined instructions is performed to establish Quality of Service requirements at the packet-forwarding device (106.1).

4. The method of claim 1, wherein the packet's header (202) includes access control information, and wherein the method further comprises:
determining (508) whether the access control information grants the packet permission to access the resource; and
executing (510) the instructions responsive to determining that the access control information grants permission to access the resource.

5. A non-transitory computer-readable storage medium (708) storing instructions (284) that when executed by a packet forwarding device (106.1) cause the packet forwarding device to perform the method of any of claims 1-4.

6. An apparatus (600) comprising means for carrying out the method of any of claims 1-4.

## Patentansprüche

1. Computerimplementiertes Verfahren zum Verarbeiten eines Pakets in einem Netzwerk (102) mit benannten Daten, wobei das Verfahren Folgendes umfasst:
Empfangen (302) eines Pakets (200) durch eine Paketweiterleitungsvorrichtung (106.1), wobei das Paket einen ortsunabhängigen Namen oder ein Präfix für den Namen zum Routen des Pakets und einen Kopfdatensatz (202) umfasst, der ein oder mehrere Ressourcenfelder (204) umfasst, und wobei jedes Ressourcenfeld eine oder mehrere Anweisungen umfasst, die an einer entsprechenden Ressource der Paketweiterleitungsvorrichtung ausgeführt werden sollen;
Analysieren (304) jedes Ressourcenfelds, um den einen oder die mehreren Befehle zum Manipulieren der entsprechenden Ressource zu bestimmen; und
Ausführen (310) der einen oder mehreren Anweisungen auf der entsprechenden Ressource;
wobei die eine der Ressourcen eine Weiterleitungsinformationsbasis (Forwarding Information Base, FIB) ist und wobei einer der Befehle an FIB-Einträgen ausgeführt wird, um Routen dynamisch zu ändern, wenn das Paket das Netzwerk zu einem Zielnetzwerkknoten durchquert, der dem Namen oder dem Präfix des Pakets zugeordnet ist;
und Weiterleiten des Pakets.

2. Verfahren nach Anspruch 1, wobei eine andere der Ressourcen eine Dienstgüte- (Quality of Service, QoS) Ressource ist und wobei ein anderer der bestimmten Befehle ausgeführt wird, um eine maximale Bandbreite für eine Schnittstelle der Paketweiterleitungsvorrichtung (106.1) zu konfigurieren.

3. Verfahren nach Anspruch 1, wobei eine andere der Ressourcen eine Dienstgüte-, QoS, Ressource ist und wobei ein anderer der bestimmten Befehle ausgeführt wird, um Dienstgüteanforderungen bei der Paketweiterleitungsvorrichtung (106.1) zu etablieren.

4. Verfahren nach Anspruch 1, wobei der Kopfdatensatz (202) des Pakets Zugriffssteuerungsinformationen umfasst und wobei das Verfahren ferner Folgendes umfasst: Bestimmen (508), ob die Zugriffssteuerungsinformationen dem Paket die Erlaubnis erteilen, auf die Ressource zuzugreifen; und
Ausführen (510) der Anweisungen als Reaktion auf das Bestimmen, dass die Zugriffssteuerungsinformationen die Erlaubnis erteilen, auf die Ressource zuzugreifen.

5. Nicht-flüchtiges computerlesbares Speichermedium (708), das Anweisungen (284) speichert, die bei Ausführung durch eine Paketweiterleitungsvorrichtung (106.1) bewirken, dass die Paketweiterleitungsvorrichtung das Verfahren nach einem der Ansprüche 1 bis 4 ausführt.

6. Vorrichtung (600), die ein Mittel zum Ausführen des Verfahrens nach einem der Ansprüche 1 bis 4 umfasst.

## Revendications

1. Procédé mis en oeuvre par ordinateur pour traiter un paquet dans un réseau de données nommé (102), comprenant :
la réception (302) d'un paquet (200) par un dispositif d'acheminement de paquets (106.1), dans lequel le paquet comporte un nom ou un préfixe de nom indépendant de la position pour router le paquet, et comporte un en-tête (202) comprenant un ou plusieurs champs de ressources (204), et dans lequel chaque champ de ressource comporte une ou plusieurs instructions à exécuter sur une ressource correspondante du dispositif d'acheminement de paquets ;
l'analyse (304) de chaque champ de ressources pour déterminer les une ou plusieurs instructions de manipulation de la ressource correspondante ; et
l'exécution (310) des une ou plusieurs instructions sur la ressource correspondante ;
dans lequel l'une des ressources est une base d'informations d'acheminement, FIB, et dans lequel l'une des instructions est exécutée sur des entrées de la FIB pour changer dynamiquement des routes à la volée lorsque le paquet traverse le réseau vers un noeud de réseau cible associé au nom ou au préfixe de nom du paquet ;
et l'acheminement du paquet.

2. Procédé selon la revendication 1, dans lequel une autre des ressources est une ressource de qualité de service, QoS, et dans lequel une autre des instructions déterminées est exécutée pour configurer une largeur de bande maximum pour une interface du dispositif d'acheminement de paquets (106.1) .

3. Procédé selon la revendication 1, dans lequel une autre des ressources est une ressource de qualité de service, QoS, et dans lequel une autre des instructions déterminées est exécutée pour établir des exigences de qualité de service au niveau du dispositif d'acheminement de paquets (106.1).

4. Procédé selon la revendication 1, dans lequel l'en-tête de paquet (202) comporte des informations de commande d'accès, et le procédé comprenant en outre :
la détermination (508) que les informations de commande accordent l'autorisation au paquet d'accéder à la ressource ; et
l'exécution (510) des instructions après la détermination que les informations de commande d'accès accordent l'autorisation d'accéder à la ressource.

5. Support de mémorisation non transitoire lisible par ordinateur (708) mémorisant des instructions (284) qui, à leur exécution par un dispositif d'acheminement de paquets (106.1), amènent le dispositif d'acheminement de paquets à exécuter le procédé selon l'une quelconque des revendications 1 à 4.

6. Appareil (600) comprenant des moyens pour exécuter le procédé selon l'une quelconque des revendications 1 à 4.
